# EUROPEAN PATENT APPLICATION

(11) **EP 4 715 238 A1**
(43) Date of publication of application: **25.03.2026**
(21) Application number: 24850692.5
(22) Date of filing: 25.06.2024
(51) Int. Cl.: F16H 57/04

(54) **GEARBOX AND AUTOMOBILE**

(30) Priority: 10.08.2023 CN 202311008371
(71) Applicant: Dongfeng Motor Group Co., Ltd., Wuhan, Hubei 430000 (CN)
(72) Inventor: GAO, Wei, Wuhan, Hubei 430000 (CN); YU, Jiajia, Wuhan, Hubei 430000 (CN); ZHU, Zhe, Wuhan, Hubei 430000 (CN); KONG, Bo, Wuhan, Hubei 430000 (CN); KE, Menglong, Wuhan, Hubei 430000 (CN)
(74) Representative: Valet Patent Services Limited
(86) International application number: PCT/CN2024/101221
(87) International publication number: WO 2025/031041

(57) **Abstract**

Disclosed are a transmission and a vehicle. The transmission comprises: a housing (1); a filter (2) disposed in the housing, for filtering an oil in the housing, and an oil displacement mechanism (3) disposed in the housing. The oil displacement mechanism is movably connected to the housing, and can move relative to the housing following a tilt of the vehicle, to be immersed in the oil at a bottom of the housing, thereby avoiding an empty suction of the filter.

## Description

### CROSS-REFERENCE TO RELATED APPLICATION

This application claims priority to Chinese Patent Application No. 202311008371.X filed on August 10, 2023, the entire contents of which are incorporated herein by reference.

### TECHNICAL FIELD

This invention relates to the technical field of vehicle components, and in particular, to a transmission and a vehicle.

### BACKGROUND

A transmission is a necessary component of a vehicle driven by an internal combustion engine. During use of the transmission, an oil in the transmission may be contaminated by various factors. Therefore, a filter needs to be disposed in the transmission to remove impurities from the oil. Under different working conditions, vehicle tilting during climbing can cause the filter to experience an air suction phenomenon. The related art solves the problem of empty suction of the filter by increasing an amount of oil in the transmission, but a corresponding cost increases, and a gear churning loss of the transmission increases, thereby further reducing an overall efficiency of the transmission.

### SUMMARY

### TECHNICAL MATTER

In view of this, this invention provides a transmission and a vehicle, to solve the technical problem of how to reduce a risk of an empty suction of a filter while reducing costs.

### TECHNICAL SOLUTION

The technical solution of this invention is implemented as follows.

An embodiment of this invention provides a transmission used for a vehicle, and the transmission comprises:
a housing;
a filter disposed in the housing and configured to filter an oil in the housing; and
an oil displacement mechanism disposed in the housing, wherein the oil displacement mechanism is movably connected to the housing, and is capable of moving relative to the housing following a tilt of the vehicle, to be immersed in the oil at a bottom of the housing.

Optionally, the oil displacement mechanism is disposed close to the bottom of the housing.

Optionally, a distance between the oil displacement mechanism and the bottom of the housing is less than or equal to a distance between the filter and the bottom of the housing.

Optionally, the oil displacement mechanism is capable of moving relative to the housing in a traveling direction of the vehicle, and/or the oil displacement mechanism is capable of moving relative to the housing in a direction vertical to the traveling direction of the vehicle.

Optionally, the housing comprises a first casing and a second casing, and the first casing and the second casing are detachably connected, wherein the first casing is provided with spaced limiting ribs, and an activity channel is formed between the limiting ribs, wherein the oil displacement mechanism is in clearance fit in the activity channel, the second casing being provided with an abutting rib, wherein in a condition that the first casing and the second casing are in connection, the abutting rib abuts against the oil displacement mechanism, to limit the oil displacement mechanism to be within the activity channel, the oil displacement mechanism being capable of moving relative to the activity channel.

Optionally, the activity channel is extended in the traveling direction of the vehicle.

Optionally, the activity channel is extended in a direction vertical to the traveling direction of the vehicle.

Optionally, a bottom of the housing is provided with a slide rail. The slide rail is extended in the traveling direction of the vehicle, and the oil displacement mechanism is slidably connected to the slide rail.

Optionally, a bottom of the housing is provided with a slide rail. The slide rail is configured to extend in a circular shape. The oil displacement mechanism is slidably connected to the slide rail.

An embodiment of this invention further provides a vehicle, wherein the vehicle comprises the transmission according to any one of the above.

### ADVANTAGEOUS EFFECT

An embodiment of this invention provides a transmission. The transmission comprises a housing, a filter, and an oil displacement mechanism. The filter is disposed in the housing and is configured to filter the oil in the housing. The oil displacement mechanism is disposed in the housing. The oil displacement mechanism is movably connected to the housing and is capable of moving relative to the housing following a tilt of the vehicle. By disposing the oil displacement mechanism in the housing, with the oil displacement mechanism being capable of moving relative to the housing following the tilt of the vehicle, the oil displacement mechanism can always be immersed in the oil. Consequently, under a tilt working condition of the vehicle, the oil displacement mechanism can occupy a volume of the oil, so that a level of the oil is elevated. The elevated level of oil can submerge an oil suction port of the filter, thereby reducing a risk of empty suction at the oil suction port under a tilt working condition of the vehicle. Therefore, a dynamic submersion of the oil suction port can be achieved without supplementing the accommodation chamber with new oil, thereby reducing oil's costs and losses in overall efficiency.

### BRIEF DESCRIPTION OF DRAWINGS

FIG. 1 is a schematic structural diagram of a transmission according to an embodiment of the invention under a normal working condition;
FIG. 2 is a schematic structural diagram of the transmission according to an embodiment of the invention under a tilt working condition;
FIG. 3 is a schematic installation diagram of an oil displacement mechanism according to an embodiment of the invention.

### REFERENCE NUMERALS

1, housing; 11, accommodation chamber; 12, first casing; 121, activity channel; 13, second casing; 131, abutting rib; 2, filter; 3, oil displacement mechanism; 4, gear train.

### DETAILED DESCRIPTION

In order to make objectives, technical solutions, and advantages of this invention clearer, this invention is further described in detail below with reference to drawings and embodiments. It should be understood that specific embodiments described herein are merely used to explain this invention and are not intended to limit this invention.

Various specific technical features described in the specific embodiments may be combined in any suitable manner without contradiction. For example, different combinations of specific technical features may form different embodiments and technical solutions. To avoid unnecessary repetition, various possible combination manners of individual specific technical features in this invention are not described separately.

In the following description, involved terms "first\second..." are only intended to distinguish different objects and do not indicate that the objects are identical or related. It should be understood that description of involved orientations "above", "below", "outer", "inner" are orientations in a normal use state, and "left" and "right" directions indicate left and right directions shown in specific corresponding schematic drawings, which may or may not be left and right directions in the normal use state.

It should be noted that a term "comprise", "include" or any other variation thereof is intended to cover non-exclusive inclusion, so that a process, method, article, or device that comprises a series of elements includes not only those elements, but also other elements not explicitly listed, or elements inherent to such process, method, article, or device. Without more restrictions, an element defined by a phrase "comprising a ..." does not exclude presence of additional identical elements in the process, method, article, or device that includes the element. "A plurality of" means two or more.

It should be noted that a transmission (gearbox) converts a high-speed, low-torque mechanical power generated by a power source (internal combustion engine or electric motor) into more effective low-speed and high-torque power to drive mechanical devices such as drive shafts, differentials, and wheels. A transmission is a necessary component of a vehicle driven by an internal combustion engine. Transmissions installed on vehicles usually have multiple different speed/torque conversion ratios, often referred to as "gears" or "speeds",", to adapt to different requirements for speed and torque combinations at different driving speeds. Low speed and high torque are required when starting, whereas high speed and low torque are required when driving at high speed. Generally, a transmission that requires manual operations to change gears is called a "manual transmission" or "manual gears", and a transmission that automatically changes gears by mechanical operations is called an "automatic transmission" or "automatic gears".

During use of the transmission, an oil in the transmission may be contaminated by various factors. Therefore, a filter needs to be disposed in the transmission to remove impurities from the oil. Contamination scenarios of the oil include: 1) filtering foreign impurities, such as dust from air entering the transmission via ventilation valves; 2) filtering friction material fibers generated by friction of clutch friction plates and steel plates; 3) filtering mixtures produced by friction of plastic members such as oil seals and sealing rings under high-temperature working conditions; 4) filtering debris generated by friction of metal parts such as gears, steel belts, and chains; 5) filtering products generated during high-temperature oxidation of the oil of transmission itself, such as various organic acids, asphalt-like substances, and carbon compounds. During operations of transmission, the oil in the transmission continuously becomes contaminated. An oil filter of the transmission is used to filter out impurities generated during the operations of transmission, and supply a clean oil of transmission to various moving pairs, as well as to solenoid valves and oil passages, to perform functions of lubrication, cooling, cleaning, rust prevention, and friction reduction, thereby protecting components, ensuring a performance of transmission, and extending a service life of the transmission.

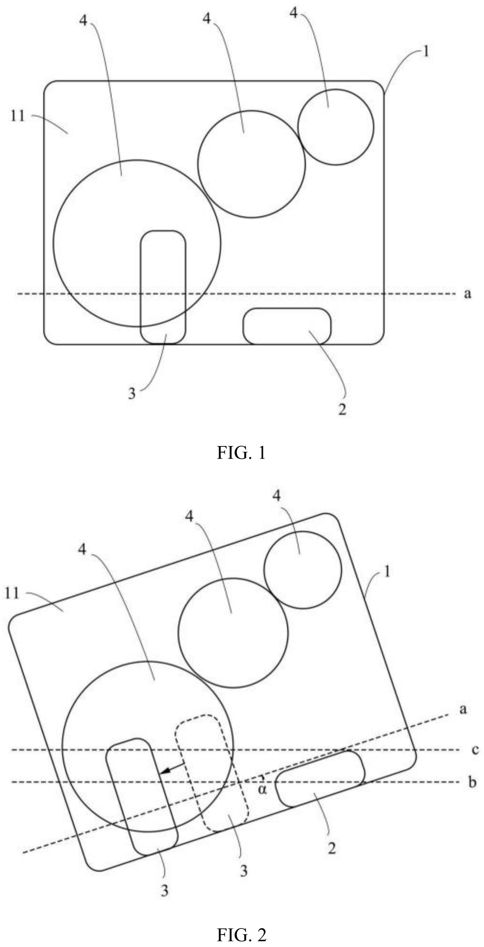

An embodiment of this invention provides a transmission. The transmission is used for a vehicle. As shown in FIG. 1, the transmission comprises a housing 1, a filter 2, and an oil displacement mechanism 3. Since there are many components inside the transmission, drawings in the embodiment of this invention schematically illustrate main components in the embodiment of this invention in a simplified manner. As shown in FIG. 1, the housing 1 is provided with an accommodation chamber 11. The accommodation chamber 11 can be used for installing other components within the transmission. The filter 2 is disposed in the housing 1 for filtering impurities in the oil within the housing 1. The oil displacement mechanism 3 is disposed in the housing 1. The oil displacement mechanism 3 is movably connected to the housing 1 and is capable of moving relative to the housing 1 following a tilt of the vehicle, to be immersed in the oil at a bottom of the housing 1. FIG. 1 shows a schematic structural diagram of the transmission under a normal working condition. As shown in FIG. 1 and FIG. 2, under the normal working condition of the vehicle, the vehicle travels on a horizontal road surface, the housing 1 is also in a horizontal state, and a level a of oil in the housing 1 can cover the filter 2, so that oil suction ports on the filter 2 are all supplied with oil, thereby preventing an air suction phenomenon of the filter 2. As shown in FIG. 2, in a condition that the vehicle is climbing or descending, the vehicle travels on an inclined road surface, and the housing 1 is also in an inclined state. Without the oil displacement mechanism 3, the level of oil in the housing 1 will be changed from a to b. The level b of oil is lower than the oil suction port of the filter 2, such that there is no oil at the oil suction port, and thus the filter is subjected to an empty suction phenomenon under the tilt working condition. As shown in FIG. 2, the transmission in the embodiment of this invention is provided with the oil displacement mechanism 3. The oil displacement mechanism 3 is capable of moving relative to the housing 1 following the tilt of the vehicle. Under the tilt working condition of the vehicle, the transmission is tilted; the oil displacement mechanism 3 is tilted; and the oil displacement mechanism 3 moves to a position where it is immersed in the oil. The oil displacement mechanism 3 occupies a certain volume of the oil, causing the level of oil to rise from a position b to a position c. An elevated level c of oil can submerge the oil suction port of the filter 2, thereby reducing a risk of empty suction of the oil suction port under the tilt working condition of the vehicle. Therefore, a dynamic submersion of the oil suction port can be achieved without supplementing the accommodation chamber with new oil, thereby reducing oil's costs and losses in overall efficiency.

It should be noted that the embodiment of this invention does not limit a specific form of the movable connection between the oil displacement mechanism and the housing, provided that the oil displacement mechanism can move relative to the housing following the tilt of the vehicle. For example, when the vehicle is in an uphill state, the oil displacement mechanism can move rearward relative to the housing with the vehicle's tilt; when the vehicle is in a downhill state, the oil displacement mechanism can move forward relative to the housing with the vehicle's tilt. Alternatively, when the vehicle is tilted toward left or right, the oil displacement mechanism can move left or right relative to the housing with the vehicle's tilt, thereby achieving an elevation of the level of oil to reduce the risk of empty suction of the oil suction port of the filter.

An embodiment of this invention provides a transmission. The transmission comprises a housing, a filter, and an oil displacement mechanism. The filter is disposed in the housing and is configured to filter the oil in the housing. The oil displacement mechanism is disposed in the housing. The oil displacement mechanism is movably connected to the housing and is capable of moving relative to the housing following a tilt of the vehicle. The oil displacement mechanism is disposed in the housing and capable of moving relative to the housing following the tilt of the vehicle, to enable the oil displacement mechanism to always be immersed in the oil. Consequently, under the tilt working condition of the vehicle, the oil displacement mechanism can occupy a volume of the oil, so that a level of oil is elevated. An elevated level of oil can submerge an oil suction port of the filter, thereby reducing the risk of empty suction at the oil suction port under the tilt working condition of the vehicle. Therefore, a dynamic submersion of the oil suction port can be achieved without supplementing the accommodation chamber with new oil, thereby reducing oil's costs and losses in overall efficiency.

Optionally, as shown in FIG. 1, the oil displacement mechanism 3 is disposed close to the bottom of the housing 1. It should be noted that "above", "below", "left", and "right" described in the embodiments of this invention represent the orientation of transmission during vehicle operation. Under a normal working condition of the vehicle, the bottom of the housing 1 refers to a lower portion thereof. An oil in the housing 1 is accumulated at the bottom of the housing 1 by gravity. In the embodiment of this invention, the oil displacement mechanism 3 is disposed close to the bottom of the housing 1. The expression "close to the bottom of the housing 1" indicates that a distance between the oil displacement mechanism 3 and the bottom of the housing 1 is less than or equal to a set value, or a ratio of this distance to a height of the housing 1 is less than or equal to a set ratio. Alternatively, the expression "close to the bottom of the housing 1" indicates that the oil displacement mechanism 3 is closer to the bottom of the housing 1 compared to other components in the housing 1. In the embodiment of this invention, the oil displacement mechanism 3 being disposed close to the bottom of the housing 1 is conducive to disposing the oil displacement mechanism as close as possible to the oil accumulated at the bottom of the housing 1, such that the oil displacement mechanism 3 moving within the housing can be immersed in the oil as much as possible, thereby changing a height of the oil.

Optionally, as shown in FIG. 1, a distance between the oil displacement mechanism 3 and the bottom of the housing 1 is less than or equal to a distance between the filter 2 and the bottom of the housing 1. In the embodiment shown in FIG. 1, the distance between the oil displacement mechanism 3 and the bottom of the housing 1 equals the distance between the filter 2 and the bottom of the housing 1. In other embodiments, the distance between the oil displacement mechanism 3 and the bottom of the housing 1 may be less than that between the filter 2 and the bottom of the housing 1. In the embodiment of this invention, the distance between the oil displacement mechanism 3 and the bottom of the housing 1 is configured to be less than or equal to the distance between the filter 2 and the bottom of the housing 1, such that a movement of the oil displacement mechanism 3 relative to the housing can change the height of the oil at the bottom of the housing 1 as much as possible, enabling a raised oil to submerge the oil suction port of the filter 2 as much as possible.

Optionally, as shown in FIG. 1 and FIG. 2, the oil displacement mechanism 3 can move relative to the housing 1 in a traveling direction of the vehicle (or a reversing direction of the vehicle). For example, the vehicle is climbing uphill during forward motion thereof, the oil in the housing 1 is tilted backward at an angle α, and the oil displacement mechanism 3 follows the vehicle to move backward relative to the housing 1. The oil displacement mechanism 3 moves into the oil to occupy a certain space therein and raise the height of the oil. Optionally, the oil displacement mechanism 3 can move relative to the housing 1 in a direction vertical to the traveling direction of the vehicle. It should be noted that the direction vertical to the vehicle's traveling direction refers to a left-right direction of the vehicle, that is, in a working condition that the vehicle is tilted leftward or rightward, the oil displacement mechanism 3 similarly moves relative to the housing 1 following the tilt of the vehicle, thereby satisfying a requirement to raise the level of oil as much as possible under various tilt conditions to reduce the risk of empty suction at the oil suction port.

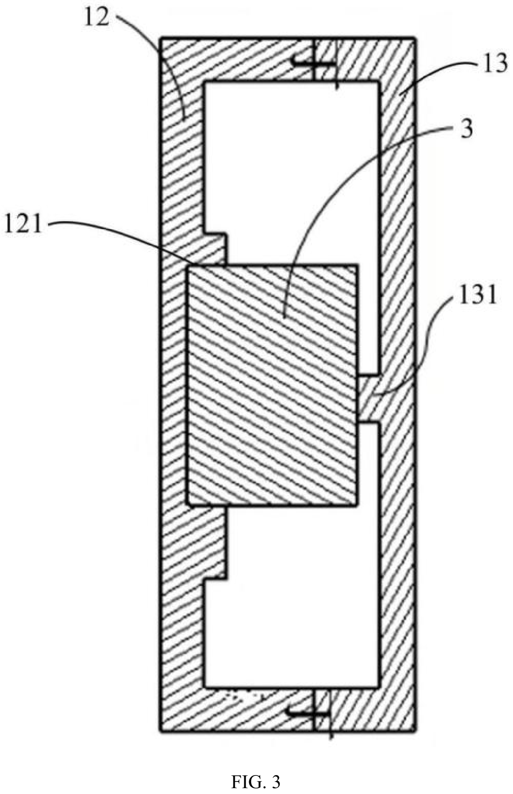

Optionally, as shown in FIG. 3, the housing 1 comprises a first casing 12 and a second casing 13. The first casing 12 and the second casing 13 are detachably connected. It should be noted that the embodiment of this invention does not limit a connection manner between the first casing 12 and the second casing 13. For example, the first casing 12 may be connected to the second casing 13 by pins, or may be connected by snap-fit. A connection manner between the first casing and the second casing in the embodiment of this invention includes but is not limited to the above-mentioned manners.

Optionally, as shown in FIG. 3, the first casing 12 is provided with spaced limiting ribs. An activity channel 121 is formed between the limiting ribs, and the oil displacement mechanism 3 is in clearance fit in the activity channel 121. It should be noted that "clearance fit" indicates there is a certain gap between the oil displacement mechanism 3 and the limiting ribs, which enables the oil displacement mechanism 3 to move relative to the activity channel 121. Meanwhile, the limiting ribs can also provide a limiting function to the oil displacement mechanism 3, to maintain the oil displacement mechanism 3 moving along an extension direction of the activity channel 121 without disengaging therefrom. As shown in FIG. 3, the second casing 13 is provided with an abutting rib 131. In a condition that the first casing 12 and the second casing 13 are connected, the abutting rib 131 abuts against another side of the oil displacement mechanism 3, and the abutting rib 131 limits the oil displacement mechanism 3 in the activity channel 121, while the oil displacement mechanism 3 can move relative to the activity channel 121.

As shown in FIG. 3, an assembly method of the oil displacement mechanism is described as follows. First, the oil displacement mechanism 3 is fit, with a small clearance, in the activity channel 121 on the first casing 12. Then, the second casing 13 is covered on the first casing 12, and the first casing 12 and the second casing 13 may be connected by bolts. Since the second casing 13 is provided with the abutting rib 131 thereon, the abutting rib 131 can support the oil displacement mechanism 3 to be within the activity channel 121, to be conducive to improving a stability of the oil displacement mechanism 3 in the activity channel 121 and reduces a risk of the oil displacement mechanism 3 disengaging from the activity channel 121. Optionally, both the activity channel 121 and the abutting rib 131 are in clearance fit in the oil displacement mechanism 3, to be conducive to improving a sliding smoothness of the oil displacement mechanism after the vehicle is deflected under various working conditions.

Optionally, as shown in FIG. 3, the activity channel 121 is extended in the traveling direction of the vehicle. That is, in the vehicle's forward direction, whether the vehicle is climbing or descending, the oil displacement mechanism 3 disposed in the activity channel 121 can move along the extension direction of the activity channel 121 forward and backward, thereby following the vehicle's deflection direction. For example, in a condition that the vehicle is traveling uphill, the oil displacement mechanism 3 can move backward along the activity channel 121; in a condition that the vehicle is traveling downhill, the oil displacement mechanism 3 can move forward along the activity channel 121. The extension direction of the activity channel is consistent with the vehicle's forward and backward movement direction, to be advantageous to reducing a difficulty of the oil displacement mechanism moving following the vehicle's deflection in the forward-backward direction, improving a movement smoothness of the oil displacement mechanism, thereby reducing a risk of empty suction at the oil suction port of the filter.

Optionally, as shown in FIG. 3, the activity channel is extended in a direction vertical to the traveling direction of the vehicle. That is, in the vehicle's left-right direction, whether the vehicle leans to left or right, the oil displacement mechanism 3 disposed in the activity channel 121 can move left or right along the extension direction of the activity channel 121, thereby following the vehicle's deflection direction. For example, in a condition that the vehicle leans left, the oil displacement mechanism 3 can move left along the activity channel 121; in a condition that the vehicle leans right, the oil displacement mechanism 3 can move right along the activity channel 121. The extension direction of the activity channel is consistent with the vehicle's left-right deflection direction, to be advantageous to reducing a difficulty of the oil displacement mechanism moving following the vehicle's deflection in the left-right direction, improving a movement smoothness of the oil displacement mechanism, thereby reducing the risk of empty suction at the oil suction port of the filter.

Optionally, a bottom of the housing is provided with a slide rail. The slide rail is extended in the traveling direction of the vehicle, and the oil displacement mechanism is slidably connected to the slide rail. In an embodiment of the invention, the oil displacement mechanism is connected with the housing via a slide rail. This connection structure is simple, to be capable of realizing a flexible movement of the oil displacement mechanism relative to the housing.

Optionally, a bottom of the housing is provided with a slide rail. The slide rail is configured to extend in a circular shape. The oil displacement mechanism is slidably connected to the slide rail. In an embodiment of the invention, the slide rail is configured as a circular shape. In a condition that the vehicle is in the tilt working condition, the oil displacement mechanism is moved relative to the slide rail by gravity. If the slide rail is circular, then whether the vehicle deflects forward-backward or left-right, the oil displacement mechanism can move along the slide rail to an equilibrium position, thereby achieving a dynamic immersion of the oil displacement mechanism in the oil.

Optionally, the transmission further includes a gear train 4, which is disposed in the housing 1. The oil flows via the gear train 4.

Optionally, a vehicle is provided which includes the transmission according to any of the above embodiments. The transmission comprises a housing, a filter, and an oil displacement mechanism. The filter is disposed in the housing and is configured to filter the oil in the housing. The oil displacement mechanism is disposed in the housing. The oil displacement mechanism is movably connected to the housing and is capable of moving relative to the housing following a tilt of the vehicle. By disposing the oil displacement mechanism in the housing, with the oil displacement mechanism being capable of moving relative to the housing following the tilt of the vehicle, the oil displacement mechanism can always be immersed in the oil. Consequently, under a tilt working condition of the vehicle, the oil displacement mechanism can occupy a volume of the oil, so that a level of the oil is elevated. The elevated level of oil can submerge an oil suction port of the filter, thereby reducing a risk of empty suction at the oil suction port under a tilt working condition of the vehicle. Therefore, a dynamic submersion of the oil suction port can be achieved without to supplementing the accommodation chamber with new oil, thereby reducing oil's costs and losses in overall efficiency.

The above descriptions are merely optional embodiments of this invention and are not intended to limit this invention.

## Claims

1. A transmission, **characterized in that** the transmission is used for a vehicle, and the transmission comprises:
a housing;
a filter disposed in the housing and configured to filter an oil in the housing; and
an oil displacement mechanism disposed in the housing, wherein the oil displacement mechanism is movably connected to the housing, and is capable of moving relative to the housing following a tilt of the vehicle, to be immersed in the oil at a bottom of the housing.

2. The transmission according to claim 1, wherein the oil displacement mechanism is disposed close to the bottom of the housing.

3. The transmission according to claim 2, wherein a distance between the oil displacement mechanism and the bottom of the housing is less than or equal to a distance between the filter and the bottom of the housing.

4. The transmission according to any one of claims 1 to 3, wherein the oil displacement mechanism is capable of moving relative to the housing in a traveling direction of the vehicle, and/or the oil displacement mechanism is capable of moving relative to the housing in a direction vertical to the traveling direction of the vehicle.

5. The transmission according to claim 4, wherein the housing comprises a first casing and a second casing, and the first casing and the second casing are detachably connected, wherein the first casing is provided with spaced limiting ribs, and an activity channel is formed between the limiting ribs, wherein the oil displacement mechanism is in clearance fit in the activity channel, the second casing being provided with an abutting rib, wherein in a condition that the first casing and the second casing are connected, the abutting rib abuts against the oil displacement mechanism, to limit the oil displacement mechanism to be within the activity channel, the oil displacement mechanism being capable of moving relative to the activity channel.

6. The transmission according to claim 5, wherein the activity channel is extended in the traveling direction of the vehicle.

7. The transmission according to claim 5, wherein the activity channel is extended in a direction vertical to the traveling direction of the vehicle.

8. The transmission according to claim 4, wherein the bottom of the housing is provided with a slide rail, the slide rail being extended in the traveling direction of the vehicle, the oil displacement mechanism being slidably connected to the slide rail.

9. The transmission according to claim 4, wherein the bottom of the housing is provided with a slide rail, the slide rail being configured to be extended in a circular shape, the oil displacement mechanism being slidably connected to the slide rail.

10. A vehicle, **characterized in that** the vehicle comprises the transmission according to any one of claims 1 to 9.
